# FASCICULE DE BREVET EUROPEEN

(11) **EP 0 767 747 B1**
(45) Date de publication et mention de la délivrance du brevet: **16.12.1998**
(21) Numéro de dépôt: 95918637.0
(22) Date de dépôt: 25.04.1995
(51) Int. Cl.: B60T 7/04, B60T 13/565

(54) **ENSEMBLE D'UN SERVOMOTEUR PNEUMATIQUE D'ASSISTANCE AU FREINAGE ET D'UN MAITRE-CYLINDRE**
BAUEINHEIT AUS UNTERDRUCK-BREMSKRAFTVERSTÄRKER UND HAUPTBREMSZYLINDER
PNEUMATIC BRAKE SERVO/MASTER CYLINDER ASSEMBLY

(30) Priorité: 29.06.1994 FR 9408031
(43) Date de publication de la demande: 16.04.1997
(73) Titulaire: Bosch Systemes de Freinage, 93700 Drancy (FR)
(72) Inventeur: GAUTIER, Jean, Pierre, F-93600 Aulnay-sous-Bois (FR); VERBO, Ulysse, F-93600 Aulnay-sous-Bois (FR); PEREZ REVILLA, Miguel, F-95100 Argenteuil (FR); COBIANCHI, Flavio AlliedSignal Europe, F-93700 Drancy (FR)
(86) Numéro de dépôt international: FR9500537
(87) Numéro de publication internationale: WO9600669

(56) Documents cités:
- EP-A- 0 257 360
- EP-A- 0 490 720
- FR-A- 2 437 337
- FR-A- 2 482 547
- FR-A- 2 620 542

## Description

La présente invention concerne les ensembles de freinage, constitués de servomoteurs pneumatiques d'assistance et de maîtres-cylindres, du type de ceux qui sont utilisés pour fournir une assistance au freinage des véhicules automobiles.

Les servomoteurs pneumatiques comportent de façon classique une enveloppe fixée sur une paroi séparant l'habitacle d'un compartiment avant d'un véhicule, et séparée de façon étanche par une structure de paroi mobile en une chambre avant reliée en permanence à une source de dépression et une chambre arrière reliée sélectivement à la chambre avant ou à l'atmosphère par un moyen de valve actionné par une tige de commande susceptible de s'appuyer, par l'intermédiaire de la face avant d'un plongeur sur la face arrière d'un disque de réaction solidaire d'une tige de poussée.

Parallèlement, les maîtres-cylindres comportent de façon classique un corps formé avec au moins deux brides de fixation du maître-cylindre sur l'enveloppe du servomoteur, chaque bride coopérant avec une vis et un écrou, au moins un piston coulissant dans un alésage formé axialement dans le corps du maître-cylindre, de sorte que la tige de poussée du servomoteur coopère avec le piston du maître-cylindre lors de l'actionnement de la tige de commande du servomoteur.

De nombreux documents illustrent ce type d'ensembles de freinage. Ils sont habituellement disposés dans le compartiment avant d'un véhicule automobile, contenant généralement le moteur du véhicule, le servomoteur étant fixé par sa paroi arrière sur le tablier de séparation entre ce compartiment avant et l'habitacle, et le maître-cylindre étant fixé sur la paroi avant du servomoteur. La tige de commande du servomoteur traverse une ouverture du tablier et elle est actionnée par une pédale de freinage dans l'habitacle.

Lors d'une collision frontale ou quasi-frontale du véhicule avec un autre véhicule ou avec un obstacle fixe, la structure et la carrosserie du véhicule sont conçus pour se déformer progressivement pour absorber la plus grande partie possible de l'énergie mise en jeu dans cette collision.

Il est néanmoins fréquent que le moteur, ou la charge transportée dans le compartiment avant du véhicule, recule sous l'effet d'une telle collision et vienne interférer avec le maître-cylindre. Une telle interférence peut résulter en l'application sur le maître-cylindre d'une force dirigée selon son axe, ou d'une force faisant un certain angle avec son axe. Il en résulte cependant dans tous les cas que le maître-cylindre sollicite vers l'arrière, par l'intermédiaire de ses brides de fixation, l'enveloppe du servomoteur vers le tablier du véhicule, et par l'intermédiaire de son piston, la tige de poussée, et donc la tige de commande du servomoteur qui lui est coaxiale.

Il s'ensuit donc qu'une collision frontale ou quasi-frontale a pour conséquences, du fait de la disposition de l'ensemble servomoteur-maître-cylindre dans le compartiment avant du véhicule, de faire d'abord reculer le tablier sous l'action de l'enveloppe du servomoteur, et ce d'autant plus intensément que le servomoteur est équipé de tirants, et de faire également reculer la pédale de frein, et ce d'autant plus loin que l'ensemble servomoteur-maître-cylindre était actionné au moment de la collision, c'est à dire qu'une pression élevée régnait à l'intérieur du maître-cylindre, ces deux effets s'additionnant et pouvant occasionner des blessures importantes au conducteur du véhicule.

Divers documents ont déjà tenté d'apporter une solution à ce problème. Le document FR-A-2 437 337 par exemple prévoit que le secteur de tablier placé au dessus de l'espace où le conducteur place ses pieds se situe le plus près possible de la direction, et que le secteur frontal de tablier se prolonge vers l'avant jusqu'à un point fixe d'articulation prévu dans le compartiment avant, point auquel est fixé un support destiné à recevoir un ensemble de freinage tel que défini plus haut, ce support étant conformé et disposé de telle sorte que sous l'effet d'une poussée importante, il puisse pivoter autour de ce point fixe d'articulation.

Le document FR-A-2 482 547 prévoit quant à lui de fixer le servomoteur au pot supérieur d'une structure anti-chocs, l'axe de la pédale de freinage étant monté au sommet du pot supérieur qui aboutit, par un décrochement, à un pot inférieur plus grand et déformable raccordé au tablier, le pot inférieur étant conformé de façon telle qu'à sa partie supérieure, la course de déformation disponible soit plus grande qu'à sa partie inférieure.

Ces deux documents de l'art antérieur prévoient donc essentiellement la même solution, à savoir d'interposer entre le servomoteur et le tablier une structure basculante ou déformable pour absorber l'énergie engendrée au cours de la collision. Une telle solution présente toutefois un inconvénient important dans le cas où le compartiment avant constitue le compartiment moteur du véhicule. En effet, dans ce cas, la complexité des moteurs modernes, de même que la compacité des véhicules désirée par les constructeurs automobiles, font qu'il n'existe que peu ou pas de place disponible dans ce compartiment moteur pour y disposer des équipements supplémentaires.

La présente invention a donc pour objet de résoudre ce problème, en proposant un ensemble de freinage, constitué d'un servomoteur pneumatique et d'un maître-cylindre, chacun étant du type rappelé ci-dessus, cet ensemble étant tel qu'une interférence du moteur ou de la charge transportée dans le compartiment avant du véhicule avec le maître-cylindre ne résulte pas en une projection de la pédale de freinage vers le conducteur du véhicule, et ceci sans utiliser d'éléments additionnels qui allongeraient la longueur axiale de l'ensemble de freinage en avant du tablier.

Dans ce but, selon la présente invention, des moyens sont prévus pour qu'une rotation du maître-cylindre par rapport au servomoteur sous l'effet d'un couple de rotation appliqué au maître-cylindre lors d'une sollicitation importante de ce dernier provoque l'interruption de la liaison mécanique entre le piston du maître-cylindre et la tige de poussée du servomoteur, de façon à éliminer la transmission directe sur le tablier, et surtout sur la pédale de freinage, des forces résultant de la collision et à l'origine de la sollicitation du maître-cylindre.

La rotation du maître-cylindre peut être provoquée directement par la sollicitation de ce dernier quand elle engendre des forces qui ne sont pas dirigées selon l'axe du maître-cylindre. Par contre, lorsque les forces sollicitant le maître-cylindre sont dirigées selon son axe, la présente invention apporte avantageusement des moyens pour transformer dans ces conditions les forces de sollicitation en un couple de rotation du maître-cylindre, de sorte que ce couple de rotation puisse produire l'interruption de liaison mécanique directe entre le maître-cylindre et la pédale de frein.

De façon préférentielle, les brides de fixation du maître-cylindre sur le servomoteur sont asymétriques, et on pourra prévoir de façon avantageuse qu'une des brides de fixation soit située à l'extérieur de l'enveloppe du servomoteur et que l'autre bride de fixation soit située à l'intérieur de l'enveloppe du servomoteur, pour orienter dans un sens prédéterminé une telle rotation du maître-cylindre.

D'autres buts, caractéristiques et avantages de la présente invention ressortiront plus clairement de la description qui suit d'un exemple de réalisation donné à titre illustratif, en référence aux dessins annexés sur lesquels:
- La Figure 1 représente une vue en coupe d'un ensemble constitué d'un servomoteur pneumatique d'assistance au freinage et d'un maître-cylindre, réalisé conformément à la présente invention; et
- Les Figures 2 à 8 représentent des vues en coupe de plusieurs variantes du mode de réalisation de la Figure 1.

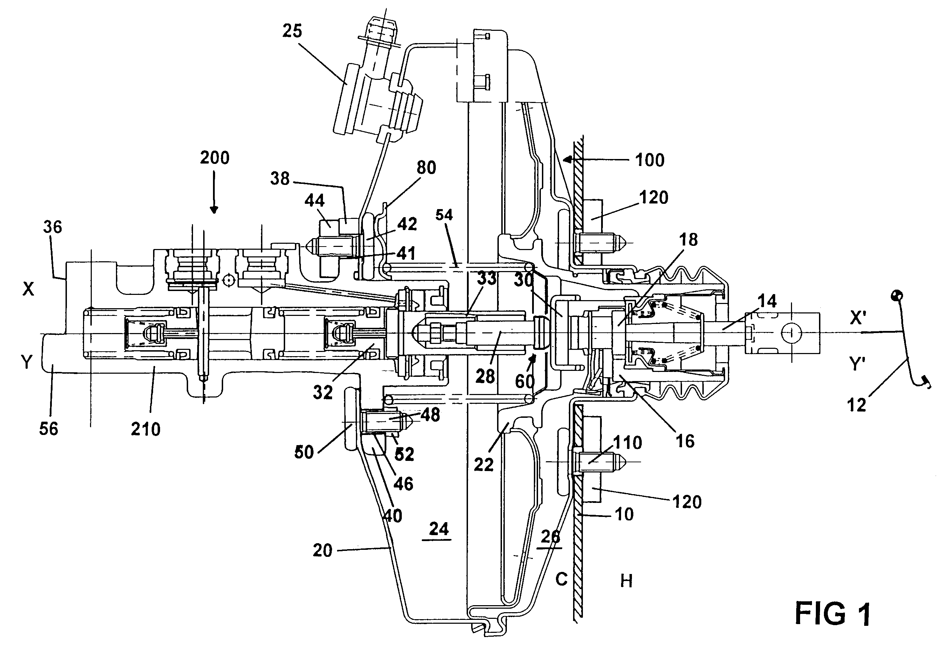

La Figure 1 représente une vue en coupe d'un ensemble de freinage, constitué d'un servomoteur pneumatique d'assistance au freinage, désigné dans son ensemble par la référence 100, et d'un maître-cylindre, désigné dans son ensemble par la référence 200.

Le servomoteur 100 est prévu pour être fixé de façon habituelle au moyen de vis 110 et d'écrous 120 sur un tablier 10 de séparation entre un compartiment avant C d'un véhicule et l'habitacle H de ce véhicule et pour être actionné par une pédale de freinage 12 située dans cet habitacle. Le maître-cylindre 200 commandant le circuit de freinage hydraulique du véhicule comporte un corps 210 prévu pour être fixé sur le servomoteur 100, de la manière qui sera décrite plus loin.

Par convention, on appelle "avant" de l'ensemble servomoteur-maître-cylindre la partie de ce dernier tournée vers le maître-cylindre 200 et "arrière" de cet ensemble la partie tournée vers la pédale de frein 12. Sur les Figures, l'avant est ainsi à gauche et l'arrière à droite.

Le servomoteur 100 comporte une enveloppe 20, dont le volume intérieur est séparé de façon étanche par une structure de paroi mobile 22 en une chambre avant 24 reliée en permanence à une source de dépression (non représentée) par un embout 25 muni habituellement d'un clapet anti-retour, et une chambre arrière 26. La pédale de frein 12 est reliée à une tige de commande 14 du servomoteur 100 qui actionne une valve à trois voies 16 par l'intermédiaire d'un plongeur 18.

Lorsque la valve 16 est au repos, elle met en communication les chambres 24 et 26, et lorsqu'elle est actionnée, elle isole les chambres 24 et 26 l'une de l'autre, et met la chambre arrière 26 en communication avec l'atmosphère ambiante. Il se crée alors une différence entre les pressions qui s'exercent sur les deux faces de la paroi mobile 22, qui engendre sur cette dernière une force d'assistance, transmise à une tige de poussée 28 par l'intermédiaire d'un disque de réaction 30.

Le disque de réaction 30, soumis par la face avant du plongeur 18 à la force d'actionnement de la tige d'entrée 14 et par la partie centrale de la paroi mobile 22 à cette force d'assistance, transmet la somme de ces deux forces à la tige de poussée 28 qui coopère avec un piston 32 coulissant dans un alésage 34 formé dans le corps 210 du maître-cylindre 200 pour faire augmenter la pression dans le circuit de freinage (non représenté) auquel celui-ci est relié. L'extrémité arrière du piston 32 forme un manchon 33 qui entoure l'extrémité avant de la tige de poussée 28, pour assurer le guidage mutuel de ces deux pièces.

Dans cet exemple, qui correspond à la disposition la plus couramment utilisée, l'axe Y-Y' de l'alésage 34 du maître-cylindre 200 est confondu avec l'axe X-X' du servomoteur 100, correspondant à l'axe commun de la tige de commande 14 et celui de la tige de poussée 28. On voit donc aisément que le maître-cylindre 200 forme une saillie perpendiculaire au tablier, et dont l'extrémité avant 36 est située à une distance importante du tablier, pouvant par exemple atteindre 40 cm.

On conçoit donc que cette extrémité 36 soit d'autant plus susceptible, lors d'une collision du véhicule, d'être heurtée violemment par une pièce du moteur ou par un élément de la charge transportée dans le compartiment C.

Un tel choc est intégralement répercuté d'une part par le corps 210 du maître-cylindre sur l'enveloppe 20 du servomoteur, et par celle-ci sur le tablier 10, et d'autre part par le piston 32 sur la tige de poussée 28, le disque de réaction 30, le plongeur 18, la tige de commande 14 et finalement sur la pédale de frein 12.

La présente invention évite cet inconvénient. Ainsi qu'on l'a représenté sur la Figure 1, le corps 210 du maître-cylindre 200 est formé avec deux brides 38 et 40. La bride 38 est identique à une des brides classiques de fixation d'un maître-cylindre, et comporte une ouverture 41 traversée par la tige d'une vis 42 dont la tête est située à l'intérieur de l'enveloppe 20 du servomoteur 100, un écrou 44 étant vissé sur la tige de la vis 42 pour fixer la bride 38 sur l'enveloppe du servomoteur.

La bride 40 par contre est située à l'intérieur de l'enveloppe 20, et elle comporte une ouverture 46 située à 180 degrés de l'ouverture 41 par rapport à l'axe X-X'. Cette ouverture 46 est traversée par la tige d'une vis 48 dont la tête 50 est située à l'extérieur de l'enveloppe 20, un écrou 52 étant vissé sur la tige de la vis 48 pour fixer la bride 40 à l'intérieur de l'enveloppe 20.

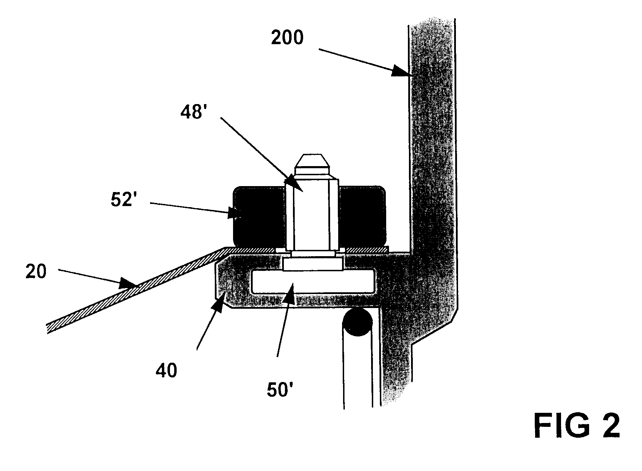

On a représenté sur la Figure 2 une variante de réalisation de la bride 40. Selon cette variante, la tige de la vis 48' est d'une seule pièce avec la bride 40, et elle s'étend vers l'avant de la bride 40. La tête 50' de la vis 48' peut également être noyée dans la bride 40 à la manière d'un insert. Un écrou 52' peut alors être vissé sur la vis 48' par l'extérieur de l'enveloppe du servomoteur lors de l'assemblage du maître-cylindre sur le servomoteur.

Lors d'une collision frontale ou quasi-frontale du véhicule ainsi équipé, la force engendrée par un composant du moteur ou un élément de la charge transportée dans le compartiment avant C venant interférer avec l'extrémité avant 36 du maître-cylindre 200 sera transmise d'une part par la bride 38 sur la face avant de l'enveloppe 20 du servomoteur 100 et d'autre part par la bride 40 sur l'écrou 52 ou 52'.

L'écrou 52 ou 52' est réalisé de façon à céder sous l'action d'une telle force. En effet, au cours de l'utilisation normale de l'ensemble servomoteur-maître-cylindre, les forces mises en jeu ont pour effet d'appliquer en permanence la bride 40 sur la face arrière de l'enveloppe 20. Ces forces résultent de l'action d'un ressort 54 de rappel en position arrière de la paroi mobile 22 et prenant appui sur la bride 40, et résultent également de l'actionnement du maître-cylindre par le servomoteur.

L'écrou 52 ou 52' a donc pour fonction normale de maintenir le maître-cylindre sur le servomoteur lors de l'assemblage, de la manutention et du stockage de cet ensemble. Il peut donc être réalisé de façon à se rompre facilement lors d'une collision, soit qu'il comporte une amorce de rupture, soit qu'il soit constitué d'un matériau peu résistant comme de la tôle emboutie ou en un matériau thermoplastique ou par exemple en Nylon (marque déposée).

On comprend donc qu'une sollicitation importante du maître-cylindre 200 vers le servomoteur 100 résultant d'une collision du véhicule aura pour effet de mettre la bride 38 en appui sur l'enveloppe 20 du servomoteur, et de libérer la fixation de la bride 40. Le maître-cylindre 200 peut ainsi pivoter autour de la bride 38, la bride 40 pénétrant à l'intérieur du servomoteur.

L'action du maître-cylindre 200 sur l'enveloppe 20 du servomoteur 100 n'est donc plus composée de forces axiales dirigées vers l'arrière, mais se trouve transformée en un couple de rotation du maître-cylindre par rapport au servomoteur.

Il s'ensuit que l'action de la bride 38 est de déformer la partie de l'enveloppe du servomoteur sur laquelle elle est fixée, et que l'action du piston 32 du maître-cylindre 200 est d'appliquer, par l'intermédiaire du manchon 33, un couple sur la tige de poussée 28 du servomoteur 100, qui va tendre à déformer cette dernière.

On peut d'autre part former sur l'extrémité avant 36 du maître-cylindre une saillie ou protubérance 56, en dehors de l'axe Y-Y' du maître-cylindre, du côté de la bride 40, pour privilégier dés le début de la sollicitation du maître-cylindre le sens de la rotation de ce dernier autour de la bride 38.

L'invention prévoit, simultanément à la mise en rotation du maître-cylindre par rapport au servomoteur, d'interrompre la liaison formée par la tige de poussée ou de découpler le piston du maître-cylindre de la tige de poussée, pour d'une part éviter à ce moment que la pédale de frein ne soit projetée vers l'arrière et risque de blesser le conducteur du véhicule, et pour d'autre part faciliter la rotation du maître-cylindre.

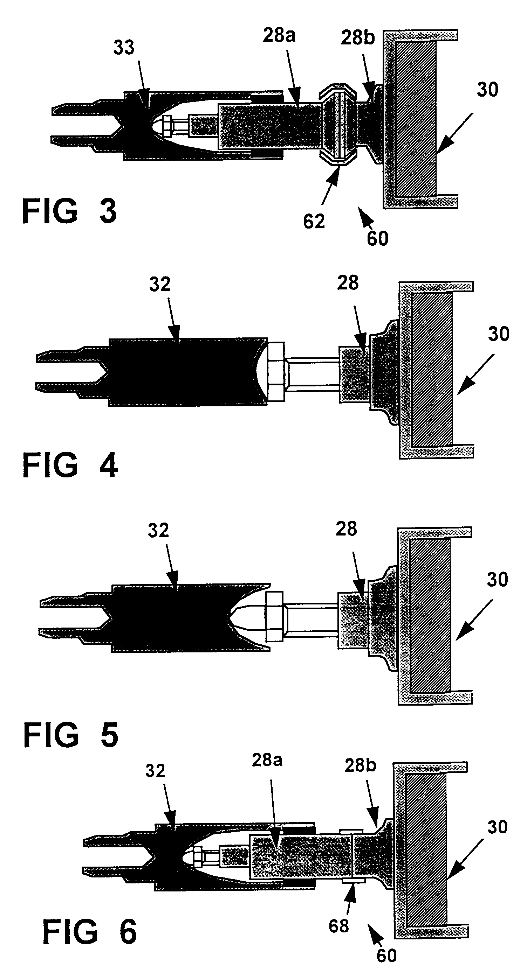

Selon l'invention, on forme la tige de poussée 28 du servomoteur en deux parties coaxiales 28a et 28b, ainsi qu'on l'a représenté plus en détail sur la Figure 3. Ces deux parties ont des faces terminales en regard planes et perpendiculaires à l'axe X-X', et elles sont réunies par un dispositif de liaison 60, qui, dans l'exemple représenté, comporte une bague 62 entourant et maintenant en contact les parties 28a et 28b. De préférence, on formera à l'extrémité arrière de la partie 28a et à l'extrémité avant de la partie 28b un bourrelet radial au voisinage immédiat de chaque face terminale, de façon à pouvoir sertir la bague 62 autour de ces bourrelets.

Lors de la sollicitation du maître-cylindre vers le servomoteur, le couple de rotation du maître-cylindre en résultant est appliqué par le manchon 33 du piston du maître-cylindre sur la partie avant 28a de la tige de poussée 28. La bague 62 du dispositif de liaison 60 est alors soumise à un effort de cisaillement important, et elle est prévue pour céder sous un tel effort et ainsi permettre la séparation des deux parties 28a et 28b de la tige de poussée. Elle est par exemple réalisée en tôle fine.

De la sorte, lorsqu'un couple de rotation est appliqué au maître-cylindre, les efforts transmis à la tige de poussée résultent en un désaccouplement des deux parties 28a et 28b de la tige de poussée, ce qui permet avantageusement au maître-cylindre de basculer encore plus par rapport au servomoteur, jusqu'à ce que leurs axes respectifs soient pratiquement perpendiculaires l'un à l'autre.

L'élément du compartiment avant qui était venu interférer avec le maître-cylindre peut ainsi reculer vers le tablier de la distance correspondant à la longueur du maître-cylindre en avant du servomoteur, sans avoir d'action ni sur le tablier ni sur la pédale de frein.

On peut aussi prévoir, ainsi qu'on l'a représenté sur la Figure 6, comme dispositif de liaison 60 une simple bague 68, dans laquelle les deux parties 28a et 28b sont montées à force et viennent en appui l'une sur l'autre.

On peut également, comme on l'a représenté sur les Figures 4 et 5, prévoir que la tige de poussée 28 soit simplement en appui sur le piston 32 du maître-cylindre, dont l'extrémité arrière a une forme concave, par exemple conique à fond arrondi, pour assurer le centrage relatif de la tige 28 et du piston 32 au cours du fonctionnement normal de l'ensemble. Ainsi, après une rotation d'un certain angle du maître-cylindre dépendant de l'angle au sommet de la partie concave du piston 32, la tige de poussée pourra s'échapper de cette partie concave et permettre une rotation supplémentaire du maître-cylindre, comme dans les cas précédents.

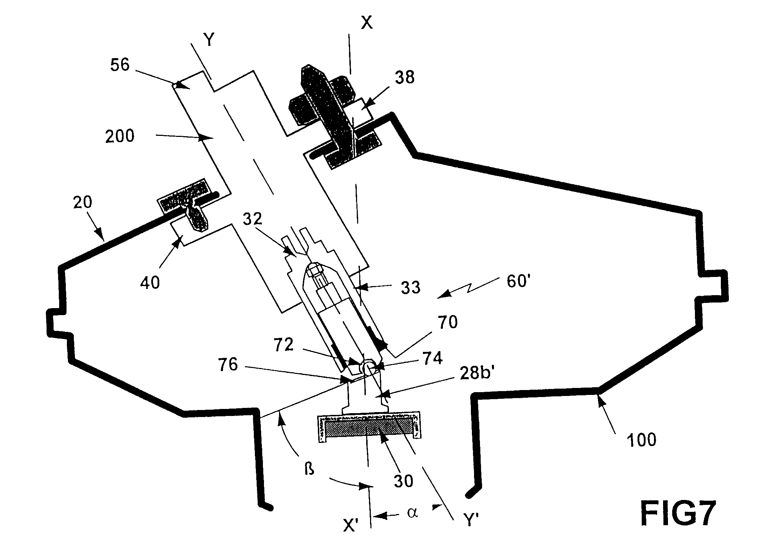

On peut enfin prévoir, comme on l'a représenté sur la Figure 7, de donner au maître-cylindre 200, dans sa position normale de fonctionnement, une position telle que son axe Y-Y' fasse un angle prédéterminé a avec l'axe X-X' du servomoteur 100.

Pour ce faire, la tige de poussée 28 est réalisée, comme dans les modes de réalisation des Figures 3 et 6, en deux parties 28a' et 28b'. La partie avant 28a' est maintenue radialement dans le manchon 33 du piston 32 du maître-cylindre 200 par une entretoise cylindrique 70, et elle comporte à son extrémité arrière un logement 72 retenant une bille ou un rouleau 74, libre en rotation dans ce logement 72. La partie arrière 28b' est formée à son extrémité avant avec une face plane 76, faisant avec l'axe X-X' du servomoteur un angle β.

Lors du fonctionnement normal de l'ensemble servomoteur-maître-cylindre, le disque de réaction 30 transmet la force d'actionnement et la force d'assistance à la partie arrière 28b' de la tige de poussée, de sorte que la bille ou le rouleau 74 de la partie avant 28a' roule sans glissement sur la face avant 76 de la partie arrière 28b', pour transmettre ces forces au piston du maître-cylindre, à la manière d'un actionneur à coin. Par un choix judicieux des angles a et b, on pourra s assurer que la course de la partie 28b' selon l'axe X-X' soit égale à la course de la partie 28a' selon l'axe Y-Y'.

Par contre, lors d'une collision et de ses conséquences, la sollicitation du maître-cylindre aura pour effet, avec l'aide éventuelle de la protubérance 56, de faire céder la fixation de la bride 40 sur l'enveloppe 20 du servomoteur 100 comme on l'a décrit plus haut. Les brides asymétriques 38 et 40 du maître-cylindre sont disposées de façon telle que le couple de rotation appliqué au maître-cylindre ait pour effet d'augmenter l'angle α.

Cet angle α a donc pour effet qu'au début de la sollicitation du maître-cylindre, le moment du couple de rotation qui est appliqué sur ce dernier a une valeur non nulle, et il facilite ainsi la mise en rotation du maître-cylindre. L'ensemble bille ou rouleau 74-surface inclinée 76 forme ainsi, comme dans les exemples précédents, un dispositif de liaison 60' entre les deux parties 28a' et 28b' de la tige de poussée 28, en permettant la séparation de ces deux parties lorsqu'un couple de rotation est appliqué au maître-cylindre.

Les modes de réalisation qui viennent d'être décrits concernent le cas général où la sollicitation du maître-cylindre consecutive à une collision est dirigée globalement vers l'arrière, sans que cette direction ait une orientation prédéfinie par rapport à l'axe du maître-cylindre. Les dispositions décrites ont donc pour objet de transformer cette sollicitation en un couple de rotation du maître-cylindre, et de faciliter cette rotation pour interrompre la liaison mécanique avec la pédale de frein.

Il peut par contre se produire des cas où l'on sait par avance qu'une collision frontale ou quasi-frontale du véhicule aura pour conséquences une sollicitation de l'extrémité du maître-cylindre selon une direction cornue,en dehors de l'axe Y-Y' de ce dernier confondu avec l'axe X-X' du servomoteur, par exemple à cause de la disposition particulière du moteur en avant du maître-cylindre ou de la conception générale du véhicule.

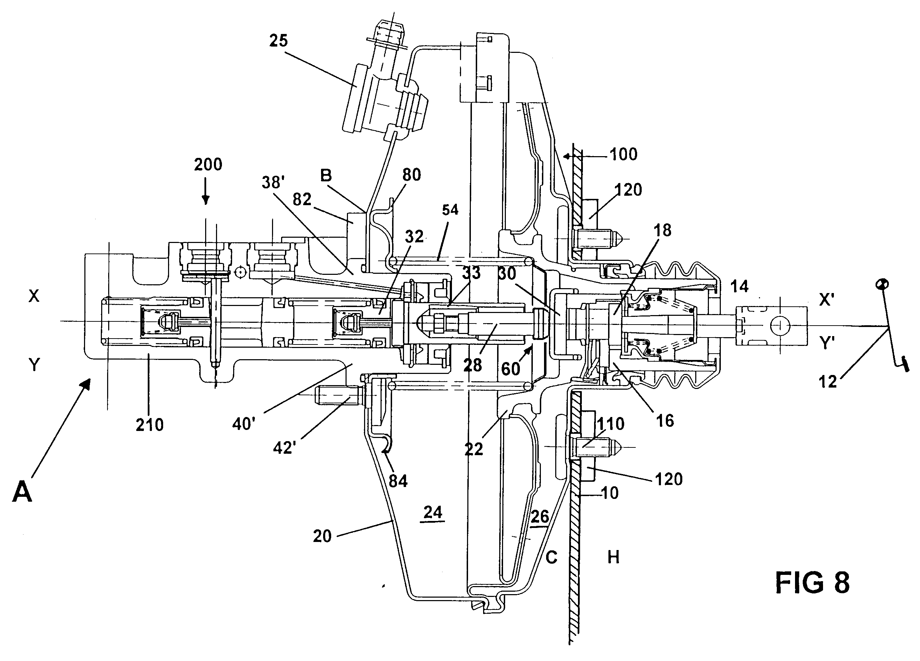

Dans ces cas, on pourra avoir recours à la variante de réalisation représentée sur la Figure 8 où on supposera que la sollicitation du maître-cylindre se produira dans la direction prédéterminée indiquée par la flèche A. Dans ce cas, on pourra omettre la protubérance 56, qui n'a plus de rôle particulier à jouer.

La bride de fixation 38' est, comme dans les exemples précédents, fixée par l'extérieur sur la face avant de l'enveloppe 20 à l'aide d'une vis (non représentée) dont la tête est située à l'intérieur de l'enveloppe 20, et dont la tige traverse un renfort annulaire 80 disposé à l'intérieur du servomoteur, l'enveloppe 20 et la bride 38'.

L'autre bride 40' est analogue à une des brides de fixation classiques d'un maître-cylindre, et elle est fixée par une vis 42' dont la tête est située à l'intérieur de l'enveloppe 20 et dont la tige traverse l'enveloppe 20 et le renfort annulaire 80.

Le corps 210 du maître-cylindre est formé avec une extension radiale 82, dont la face arrière est située dans le même plan que celui qui contient les faces arrière des brides de fixation 38' et 40', et dont le rayon par rapport à l'axe Y-Y' est égal au rayon extérieur, par rapport à l'axe X-X', de la partie du renfort annulaire 80 qui est en appui sur la paroi interne de l'enveloppe 20, de telle façon que l'enveloppe 20 soit enserrée entre le renfort 80 et l'extension 82.

Ainsi, lors d'une collision et de la sollicitation subséquente du maître-cylindre selon la direction de la flèche A, le couple de rotation imposé à ce dernier tend à le faire basculer autour du point B le plus éloigné de l'axe X-X' de l'extension 82 , du fait de la résistance à cet endroit de l'enveloppe 20 rigidifiée par le renfort 80, le maître-cylindre 200 ayant ainsi tendance à se séparer du servomoteur 100.

Simultanément, le couple de rotation transmis par le piston du maître-cylindre et son manchon 33 a pour effet de faire céder la bague 62 ou 68 du dispositif de liaison 60, ou de faire sortir la tige de poussée 28 de la forme concave à l'extrémité arrière du piston 32.

La liaison entre le piston du maître-cylindre et la tige de poussée du servomoteur n'offre donc aucun obstacle à la rotation du maître-cylindre autour du point B qui sollicite à son tour, par l'intermédiaire de ses vis de fixation, la partie du renfort 80 diamétralement opposée à celle qui est située derrière l'extension 82 en rapprochement de l'enveloppe du servomoteur.

L'invention prévoit avantageusement de munir le renfort annulaire 80, dans sa partie diamétralement opposée à celle qui coopère avec l'extension 82, d'une portion agressive 84, dont la fonction est de provoquer la rupture ou le déchirement de l'enveloppe 20 à cet endroit, lorsque la rotation du maître-cylindre par rapport au servomoteur a atteint un certain angle sous l'effet du couple qui lui est appliqué, afin de ne pas contrarier le mouvement de rotation du maître-cylindre, en brisant la liaison de la bride 40' avec le reste de l'enveloppe du servomoteur.

Il est à noter que le plan de la Figure 8 correspond à un exemple général dans lequel la flèche A et l'axe Y-Y' du maître-cylindre définissent un plan différent de celui qui passe par l'axe X-X' du servomoteur et qui contient les axes des ouvertures de fixation des brides du maître-cylindre. Dans le cas particulier où ces deux plans sont confondus, l'extension 82 pourra être formée sur l'une des brides de fixation 38' ou 40'.

Bien entendu, l'invention n'est pas limitée aux modes de réalisation qui ont été décrits, mais elle est susceptible au contraire de recevoir de nombreuses modifications qui apparaîtront à l'homme du métier. C'est ainsi que, dans le cas où la tige de poussée est en deux parties formant un angle entre elles, le logement contenant la bille ou le rouleau 74 pourra être formé à l'extrémité avant de la partie arrière 28b', pour coopérer avec une face inclinée 76 formée sur l'extrémité arrière de la partie avant 28a'.

## Revendications

1. Ensemble d'un servomoteur pneumatique d'assistance au freinage (100) d'un véhicule automobile et d'un maître-cylindre (200), le servomoteur (100) comportant une enveloppe (20) fixée sur une paroi (10) séparant l'habitacle (H) d'un compartiment avant (C) du véhicule, et séparée de façon étanche par une structure de paroi mobile (22) en une chambre avant (24) reliée en permanence à une source de dépression et une chambre arrière (26) reliée sélectivement à la chambre avant (24) ou à l'atmosphère par un moyen de valve (16) actionné par une tige de commande (14) susceptible de s'appuyer, par l'intermédiaire de la face avant d'un plongeur (18) sur la face arrière d'un disque de réaction (30) solidaire d'une tige de poussée (28), le maître-cylindre (200) comportant un corps (210) formé avec au moins deux brides de fixation (38, 38'; 40, 40') du maître-cylindre (200) sur l'enveloppe (20) du servomoteur (100), chaque bride (38, 38'; 40, 40') coopérant avec une vis (42,42',48,48') et un écrou (44;52,52'), au moins un piston (32) coulissant dans un alésage (34) formé axialement (Y-Y') dans le corps (210) du maître-cylindre (200), la tige de poussée (28) du servomoteur (100) coopérant avec le piston (32) du maître-cylindre (200), caractérisé en ce que des moyens (60,60') sont prévus pour qu'une rotation du maître-cylindre (200) par rapport au servomoteur (100) sous l'effet d'un couple de rotation appliqué au maître-cylindre (200) lors d'une sollicitation importante de ce dernier provoque l'interruption de la liaison mécanique entre le piston (32) du maître-cylindre (200) et la tige de poussée (28) du servomoteur (100).

2. Ensemble selon la revendication 1, caractérisé en ce que la tige de poussée (28) du servomoteur (100) comporte au moins deux parties (28a,28b;28a',28b') réunies par un dispositif de liaison (60,60') permettant la séparation des deux parties (28a,28b;28a',28b') de la tige de poussée (28) lorsqu'un couple de rotation est appliqué au corps (210) du maître-cylindre (200) par rapport à l'enveloppe (20) du servomoteur (100).

3. Ensemble selon la revendication 2, caractérisé en ce que les deux parties (28a,28b) de la tige de poussée (28) sont coaxiales (X-X'), et en ce que le dispositif de liaison (60) comporte un manchon (62) entourant les extrémités en regard des deux parties (28a,28b) de la tige de poussée (28) et les maintenant normalement en contact.

4. Ensemble selon la revendication 2, caractérisé en ce que les deux parties (28a',28b') de la tige de poussée (28) forment entre elles un angle (α), et en ce que le dispositif de liaison (60') comporte une bille ou un rouleau (74) libre en rotation dans un logement (72) formé dans l'extrémité d'une des parties (28a',28b') et susceptible de rouler sur une face plane (76) formée à l'extrémité de l'autre partie (28b',28a') et inclinée sur l'axe (X-X',Y-Y') de cette autre partie (28b',28a').

5. Ensemble selon la revendication 3, caractérisé en ce que l'extrémité avant de la tige de poussée (28) du servomoteur (10) est en appui sur une partie concave formée à l'extrémité arrière du piston (32) du maître-cylindre (200).

6. Ensemble selon l'une des revendications précédentes, caractérisé en ce que le corps (210) du maître-cylindre (200) est formé avec une extension radiale (82) dont le rayon par rapport à l'axe (Y-Y') du maître-cylindre (200) est sensiblement égal au rayon extérieur, par rapport à l'axe (X-X') du servomoteur (100), d'un renfort annulaire (80) en appui sur la paroi interne de l'enveloppe (20) du servomoteur (100).

7. Ensemble selon la revendication 6, caractérisé en ce que le renfort annulaire (80) comporte, dans une partie diamétralement opposée à celle qui est située axialement derrière l'extension (82), une portion agressive (84), provoquant la rupture ou le déchirement de l'enveloppe (20) du servomoteur lorsque la rotation du maître-cylindre (200) par rapport au servomoteur (100) a atteint un angle prédéterminé sous l'effet du couple de rotation appliqué au maître-cylindre (200).

8. Ensemble selon la revendication 1, caractérisé en ce que les brides (38,40) de fixation du maître-cylindre (200) sur le servomoteur (100) sont asymétriques.

9. Ensemble selon la revendication 8, caractérisé en ce qu'une première bride (38) de fixation est située à l'extérieur de l'enveloppe (20) du servomoteur (100) et qu'une seconde bride (40) de fixation est située à l'intérieur de l'enveloppe (20) du servomoteur (100).

10. Ensemble selon la revendication 9, caractérisé en ce qu'un écrou (52,52') coopérant avec la seconde bride (40) de fixation est apte à céder lors d'une sollicitation importante du maître-cylindre (200) en direction du servomoteur (100).

11. Ensemble selon l'une des revendications précédentes, caractérisé en ce que l'extrémité avant (36) du maître-cylindre (200) est formée avec une protubérance (56) située en dehors de l'axe (Y-Y') du maître-cylindre (200), du côté de la seconde bride de fixation (40).

## Claims

1. Assembly of a pneumatic brake booster (100) of a motor vehicle and of a master cylinder (200), the booster (100) including a casing (20) fixed to a wall (10) separating the passenger compartment (H) from a front compartment (C) of the vehicle, and divided in leaktight fashion by a movable wall structure (22) into a front chamber (24) permanently connected to a source of partial vacuum and a rear chamber (26) connected selectively to the front chamber (24) or to the atmosphere by a valve means (16) actuated by a control rod (14) capable of bearing, by means of the front face of a plunger (18) on the rear face of a reaction disk (30) secured to a push rod (28), the master cylinder (200) including a body (210) formed with at least two flanges (38, 38'; 40, 40') for fixing the master cylinder (200) to the casing (20) of the booster (100), each flange (38, 38'; 40, 40') interacting with a screw (42, 42', 48, 48') and a nut (44; 52, 52'), at least one piston (32) sliding in a bore (34) formed axially (Y-Y') in the body (210) of the master cylinder (200), the push rod (28) of the booster (100) interacting with the piston (32) of the master cylinder (200), characterized in that means (60, 60') are provided so that a rotation of the master cylinder (200) with respect to the booster (100) under the effect of a rotational torque applied to the master cylinder (200) when the latter is pushed substantially breaks the mechanical link between the piston (32) of the master cylinder (200) and the push rod (28) of the booster (100)

2. Assembly according to Claim 1, characterized in that the push rod (28) of the booster (100) includes at least two parts (28a, 28b; 28a', 28b') joined together by a linking device (60, 60') allowing the two parts (28a, 28b; 28a', 28b') of the push rod (28) to separate when a rotational torque is applied to the body (210) of the master cylinder (200) with respect to the casing (20) of the booster (100).

3. Assembly according to Claim 2, characterized in that the two parts (28a, 28b) of the push rod (28) are coaxial (X-X'), and in that the linking device (60) includes a sleeve (62) surrounding the facing ends of the two parts (28a, 28b) of the push rod (28) and normally keeping them in contact.

4. Assembly according to Claim 2, characterized in that the two parts (28a', 28b') of the push rod (28) form an angle (α) between them, and in that the linking device (60') includes a ball or a roller (74) free to rotate in a housing (72) formed in the end of one of the parts (28a', 28b') and capable of rolling over a planar face (76) formed at the end of the other part (28b', 28a') and inclined with respect to the axis (X-X', Y-Y') of this other part (28b', 28a').

5. Assembly according to Claim 3, characterized in that the front end of the push rod (28) of the booster (10) bears on a concave part formed at the rear end of the piston (32) of the master cylinder (200).

6. Assembly according to one of the preceding claims, characterized in that the body (210) of the master cylinder (200) is formed with a radial extension (82) of which the radius with respect to the axis (Y-Y') of the master cylinder (200) is substantially equal to the outside radius, with respect to the axis (X-X') of the booster (100), of an annular reinforcement (80) bearing on the internal wall of the casing (20) of the booster (100).

7. Assembly according to Claim 6, characterized in that the annular reinforcement (80) includes, in a part diametrically opposite the one which is situated axially in the back of the extension (82), an aggressive portion (84) breaking or tearing the casing (20) of the booster when the rotation of the master cylinder (200) with respect to the booster (100) has reached a predetermined angle under the effect of the rotational torque applied to the master cylinder (200).

8. Assembly according to Claim 1, characterized in that the flanges (38, 40) for fixing the master cylinder (200) to the booster (100) are asymmetric.

9. Assembly according to Claim 8, characterized in that a first fixing flange (38) is situated outside the casing (20) of the booster (100) and that a second fixing flange (40) is situated inside the casing (20) of the booster (100).

10. Assembly according to Claim 9, characterized in that a nut (52, 52') interacting with the second fixing flange (40) is capable of giving when the master cylinder (200) is pushed significantly toward the booster (100).

11. Assembly according to one of the preceding claims, characterized in that the front end (36) of the master cylinder (200) is formed with a protuberance (56) situated away from the axis (Y-Y') of the master cylinder (200) on the second fixing flange (40) side.

## Patentansprüche

1. Baugruppe aus einem pneumatischen Bremsunterstützungs-Servomotor (100) eines Kraftfahrzeugs und einem Hauptzylinder (200), wobei der Servomotor (100) ein Gehäuse (20) umfaßt, das an einer Wand (10) befestigt ist, die die Fahrgastzelle (H) von einem vorderen Raum (C) des Fahrzeugs abtrennt, und das auf dichte Weise durch eine bewegliche Wandstruktur (22) in eine vordere Kammer (24) unterteilt ist, die ständig an eine Unterdruckquelle angeschlossen ist, und eine hintere Kammer (26), die wahlweise mit der vorderen Kammer (24) oder mit dem Außendruck über ein Ventil (16) verbunden ist, das von einer Steuerstange (14) betätigt wird, die sich mit Hilfe der Vorderseite eines Tauchkolbens (18) an der Hinterseite einer Reaktionsscheibe (30) abstützen kann, die mit einer Schubstange (28) fest verbunden ist, wobei der Hauptzylinder (200) einen Körper (210) hat, der mit mindestens zwei Flanschen (38, 38'; 40, 40') zur Befestigung des Hauptzylinders (200) am Gehäuse (20) des Servomotors (100) ausgebildet ist, wobei jeder Flansch (38, 38'; 40, 40') mit einer Schraube (42, 42'; 48, 48') und einer Mutter (44; 52, 52') zusammenwirkt, wobei mindestens ein Kolben (32) in einer Bohrung (34) gleitet, die axial (Y - Y') im Körper (210) des Hauptzylinders (200) gebildet ist, wobei die Schubstange (28) des Servomotors (100) mit dem Kolben (32) des Hauptzylinders (200) zusammenwirkt, dadurch gekennzeichnet, daß Mittel (60, 60') vorgesehen sind, damit eine Drehung des Hauptzylinders (200) in Bezug auf den Servomotor (100) unter dem Einfluß eines Drehmoments, das bei einer starken Beaufschlagung des Hauptzylinders (200) auf diesen aufgebracht wird, die Unterbrechung der mechanischen Verbindung zwischen dem Kolben (32) des Hauptzylinders (200) und der Schubstange (28) des Servomotors (100) hervorruft.

2. Baugruppe nach Anspruch 1, dadurch gekennzeichnet, daß die Schubstange (28) des Servomotors (100) mindestens zwei Abschnitte (28a, 28b; 28a', 28b') umfaßt, die mittels einer Verbindungsvorrichtung (60, 60') miteinander verbunden sind, welche die Trennung der beiden Abschnitte (28a, 28b; 28a', 28b') der Schubstange (28) ermöglicht, wenn in Bezug auf das Gehäuse (20) des Servomotors (100) ein Drehmoment auf den Körper (210) des Hauptzylinders (200) aufgebracht wird.

3. Baugruppe nach Anspruch 2, dadurch gekennzeichnet, daß die beiden Abschnitte (28a, 28b) der Schubstange (28) koaxial (X - X') sind und daß die Verbindungsvorrichtung (60) eine Muffe (62) umfaßt, die die einander gegenüberliegenden Enden der beiden Abschnitte (28a, 28b) der Schubstange (28) umschließt und sie normalerweise in Berührung hält.

4. Baugruppe nach Anspruch 2, dadurch gekennzeichnet, daß die beiden Abschnitte (28a', 28b') der Schubstange (28) zwischen sich einen Winkel (α) bilden, und daß die Verbindungsvorrichtung (60') eine Kugel oder Rolle (74) enthält, die frei drehbar in einer Aufnahme (72) ist, die am Ende eines der Abschnitte (28a', 28b') gebildet ist, und die auf einer ebenen Fläche (76) rollen kann, die am Ende des anderen Abschnitts (28b', 28a') gebildet und zur Achse (X - X', Y - Y') des anderen Abschnitts (28b', 28a') geneigt ist.

5. Baugruppe nach Anspruch 3, dadurch gekennzeichnet, daß das vordere Ende der Schubstange (28) des Servomotors (10) an einem konkaven Abschnitt anliegt, der am hinteren Ende des Kolbens (32) des Hauptzylinders (200) gebildet ist.

6. Baugruppe nach einem der vorhergehenden Ansprüche, dadurch gekennzeichnet, daß der Körper (210) des Hauptzylinders (200) mit einem radialen Fortsatz (82) gebildet ist, dessen Radius in Bezug auf die Achse (Y - Y') des Hauptzylinders (200) im wesentlichen gleich dem Außenradius, in Bezug auf die Achse (X - X') des Servomotors, einer ringförmigen Verstärkung (80) ist, die an der Innenwand des Gehäuses (20) des Servomotors (100) anliegt.

7. Baugruppe nach Anspruch 6, dadurch gekennzeichnet, daß die ringförmige Verstärkung in einem Abschnitt, der dem sich axial hinter dem Fortsatz (82) befindenden diametral entgegengesetzt ist, einen agressiven Abschnitt (84) umfaßt, der den Bruch oder das Zerreißen des Gehäuses (20) des Servomotors hervorruft, wenn die Drehung des Hauptzylinders (200) in Bezug auf den Servomotor unter dem Einfluß des auf den Hauptzylinder (200) aufgebrachten Drehmoments einen vorbestimmten Winkel erreicht hat.

8. Baugruppe nach Anspruch 1, dadurch gekennzeichnet, daß die Flansche (38, 40) zur Befestigung des Hauptzylinders (200) am Servomotor (100) asymmetrisch sind.

9. Baugruppe nach Anspruch 8, dadurch gekennzeichnet, daß ein erster Befestigungsflansch (38) außerhalb des Gehäuses (20) des Servomotors (100) untergebracht ist und daß ein zweiter Befestigungsflansch innerhalb des Gehäuses (20) des Servomotors (100) untergebracht ist.

10. Baugruppe nach Anspruch 9, dadurch gekennzeichnet, daß eine Mutter (52, 52'), die mit dem zweiten Befestigungsflansch (40) zusammenwirkt, so ausgelegt ist, daß sie bei einer starken Beaufschlagung des Hauptzylinders (200) in Richtung auf den Servomotor (100) nachgeben kann.

11. Baugruppe nach einem der vorhergehenden Ansprüche, dadurch gekennzeichnet, daß das vordere Ende (36) des Hauptzylinders (200) mit einer Ausstülpung (56) gebildet ist, die außerhalb der Achse (Y - Y') des Hauptzylinders (200) auf der Seite des zweiten Befestigungsflansches (40), liegt.
